# EUROPEAN PATENT SPECIFICATION

(11) **EP 2 109 588 B1**
(45) Date of publication and mention of the grant of the patent: **28.08.2013**
(21) Application number: 08702109.3
(22) Date of filing: 14.01.2008
(51) Int. Cl.: C02F 1/70, C02F 1/72, C02F 1/44, B01D 61/04, C02F 103/16, C02F 101/20

(54) **METHOD OF TREATING LIQUID WASTE**
VERFAHREN ZUR BEHANDLUNG VON FLÜSSIGABFALL
PROCÉDÉ DE TRAITEMENT DE REJETS LIQUIDES

(30) Priority: 05.02.2007 GB 0702157
(43) Date of publication of application: 21.10.2009
(73) Proprietor: Intel Corporation, Santa Clara, CA 95052 (US)
(72) Inventor: JONES, Christopher Peter, Clevedon North Somerset BS21 6TH (GB); CHANDLER, Philip, San Francisco, CA 94116 (US)
(74) Representative: Harrison Goddard Foote LLP
(86) International application number: PCT/GB2008/050026
(87) International publication number: WO 2008/096166

(56) References cited:
- EP-A- 1 172 335
- DE-A1- 19 807 155
- US-A1- 2003 132 104

## Description

The invention relates to a method of treating liquid waste. In its preferred embodiments the method is used to treat liquid waste from a metal plating process, although the invention is not so limited and may be used to treat liquid discharged from any process.

Methods of treating liquid waste are known from documents DE 19807155. EP1172335 and US2003/0132104. The present invention aims to solve problems associated with known systems, as described below.

Osmosis is a process in which water or other solvent moves from a relatively weak solution to a relatively concentrated solution through a semi-permeable membrane. Osmosis continues until the osmotic pressure is reached. The osmotic pressure is determined by the concentration of all solutes; the higher the content of dissolved solids, the higher the osmotic pressure.

In reverse osmosis (RO), pressure is applied to the membrane to exceed the osmotic pressure so that solvent flows through the membrane to produce a solute denuded solvent. Nanofiltration (NF) is similar to reverse osmosis in that pressure is also applied to overcome the osmotic pressure to force solvent through a membrane. Unlike RO, in NF monovalent ions (for example the H⁺ and HSO₄⁻ ions in sulphuric acid) can readily pass through the membrane whereas multivalent ions (for example copper (II) ions) and large molecules do not pass through the membrane. Consequently, RO and NF membranes are commonly used to purify liquid waste.

One application of such membrane treatment is the removal of heavy metals from copper plating wastes in sulphuric acid. By conveying the waste to an NF membrane at a pressure above the osmotic pressure associated with the copper and sulphate ions, the heavy metals can be concentrated in the retentate (that part of the liquid that does not pass through the membrane), whilst the majority of the sulphuric acid will form part of the permeate (that part of the liquid which passes through the membrane), which can be removed for further treatment in a neutralisation plant. For example, a multistage NF unit can produce a copper concentration in excess of 20,000 ppm in the retentate, whilst the copper concentration in the permeate will be less than 0.5 ppm. However, in the semiconductor industry such copper wastes may include one or more oxidising agents, such as hydrogen peroxide, at relatively high concentrations, which can rapidly damage the NF membranes, resulting in short membrane lifetimes. Whilst a reducing agent such as sodium metabisulphite may be added to the waste to destroy the peroxide, this would increase the amount of sulphate in the waste. If the waste is alkaline, then the membrane has a relatively high rejection of sulphate, and thus in turn increases the osmotic pressure. Although the rejection is lower if the waste is acidic, the addition of a reactant to the waste increases the operating costs in terms of both the cost of the raw materials and cost of implementing and controlling the addition of the reactant to the waste.

A second application is the treatment of cobalt electroless plating wastes. For example, a multistage NF unit can produce a cobalt concentration in excess of 2,000 ppm in the retentate, whilst the cobalt concentration in the permeate will be less than 0.5 ppm. Such wastes typically contain a reducing agent such as dimethylamine borane (DMAB) or sodium hypophosphite which, whilst it does not cause damage to NF membranes, is deemed to be hazardous as it can evolve hydrogen by reacting with water. Consequently, the waste is normally treated by the addition of a reactant, such as sodium hypochlorite, to destroy the reducing agent. This can result in the addition of significant quantities of sodium chloride, generated as a by-product of the destruction of the reducing agent, to the liquid waste. The amount of the reactant added to the waste can be significant, for example, around three parts reactant to one part waste, which can lead to a considerable increase the size of the waste treatment plant. Furthermore, as any excess hypochlorite would rapidly attack the NF membranes, sodium metabisulphite is then added to the hypochlorite-treated waste to remove the excess oxidant, which can result in the generation of sodium sulphate. In solutions having a pH greater than 2, such as these, most of the sulphate contained in the waste stream will be retained by the NF membranes, and this can add significantly to osmotic pressure. The osmotic pressure is further increased by the high sodium chloride concentration of the liquid waste resulting from the addition of hypochlorite to the liquid. A consequence of this increase in the osmotic pressure is that relatively expensive, high pressure pumps are required to pressurise the liquid waste to a level that enables the osmotic pressure to be overcome.

It is an aim of at least the preferred embodiments of the present invention to seek to solve these problems.

The present invention provides a method of treating liquid waste containing target species, as set out in claim 1 appended hereto. Specifically, the present invention provides a method comprising the steps of exposing the liquid to a catalyst in a housing to remove either a reducing agent or an oxidising agent from the liquid, subsequently conveying the liquid to a reverse osmosis or nanofiltration membrane to obtain a retentate rich in the target species and a permeate lean in the target species, returning the retentate to the liquid upstream from the membrane and purging a housing containing the catalyst with a nitrogen purge gas to remove gaseous by products formed from converting the reducing agent or oxidising agent by the catalys.

As discussed above, the presence of either a reducing agent or an oxidising agent in the liquid waste has previously resulted in the addition of chemicals that are detrimental the operation of the membrane, not only in relation to membrane degradation but also in relation to the operating pressure required to overcome osmotic pressure considerations. In comparison, the use of a catalyst to destroy either a reducing agent or an oxidising agent within the liquid can substantially reduce the operating pressure required to overcome the osmotic pressure, thereby facilitating the use of cheaper, lower pressure pumps. It can also reduce the amount of permeate, providing the operator with a cost saving in view of the reduced amount of permeate to be removed for subsequent treatment, and provide cost savings associated with the reduction in chemical additions to the liquid waste, the reduction in the equipment size and reduced operating costs.

By recycling the retentate to the liquid upstream from the membrane, the concentration of the target species in the liquid will gradually increase. Periodically, or once this concentration has reached a selected value, the retentate and/or the feed into the membrane may be discharged to a subsequent waste treatment system or removed from the site for treatment elsewhere.

In one embodiment, the catalyst is used to remove an oxidising agent from the liquid waste. For example, this oxidising agent may be hydrogen peroxide, which may be converted into oxygen (O₂) and water (H₂O) by the catalyst. A suitable catalyst for performing this conversion is platinum loaded alumina, although any catalyst that is able to remove the oxidising agent from the liquid may be used. In the event that oxygen is generated as a by-product from the removal of the oxidising agent from the liquid waste, a housing containing the catalyst may be continuously purged during the treatment of the liquid waste with a gas to dilute the oxygen to safe limits.

The removal from the liquid waste of an oxidising agent that would otherwise damage the membrane is particularly advantageous, and so the present invention also provides a method of treating a liquid waste containing target species, comprising the steps of conveying the liquid to a reverse osmosis or nanofiltration membrane to obtain a retentate rich in target species and a permeate lean in target species, and characterised by, upstream from the membrane, exposing the liquid to a catalyst to remove an oxidising agent from the liquid to inhibit damage to the membrane.

In another embodiment, the catalyst is used to remove a reducing agent from the liquid waste. For example, this reducing agent may be an aminoborane, for example, dimethylamine borane (DMAB) which is converted into hydrogen (H₂), boric acid and dimethylamine by the catalyst. Alternatively, this reducing agent may be an alkali metal hypophosphite, such as sodium hypophosphite, which is converted into hydrogen (H₂), and phosphite ions by the catalyst. In the event that hydrogen is generated as a by-product from the removal of the reducing agent from the liquid waste, a housing containing the catalyst may be continuously purged with nitrogen during the treatment of the liquid waste. A suitable catalyst for performing this conversion is palladium loaded alumina or carbon, although any catalyst that is able to remove the reducing agent from the liquid may be used.

In either embodiment, the liquid waste may be waste discharged from a tool, with the catalyst being located in a housing mounted on or positioned adjacent to the tool. Rapid removal of the oxidising agent or reducing agent from the liquid waste is particularly advantageous; when the species to be removed from the liquid waste by the catalyst is a reducing agent, such as DMAB or sodium hypophosphite, this agent may evolve a potentially hazardous hydrogen (H₂) gas if retained within the liquid waste, and when the species to be removed from the liquid waste by the catalyst is an oxidising agent, high concentrations of O₂, for example greater than 30%, may be evolved, which can also present a safety hazard in confined spaces. Therefore, the present invention also provides a method of treating a liquid waste discharged from a tool and containing target species, comprising the steps of conveying the liquid to a reverse osmosis or nanofiltration membrane to obtain a retentate rich in target species and a permeate lean in target species, and characterised by, upstream from the membrane, conveying the liquid through a housing mounted on or positioned adjacent to the tool and containing a catalyst for removing a reducing agent from the liquid.

The target species to be retained in the retentate may be any metallic or non-metallic species, which may be charged (i.e. in the form of anions or cations), or uncharged. The invention finds particular use in the treatment of liquid waste discharged from a metal plating and electroless plating processes. For example, in one embodiment the liquid is a waste stream from a copper plating process, with the target species comprising divalent copper ions. The present invention therefore further provides a method of treating a liquid waste from a copper plating process, the liquid containing multivalent copper ions and an oxidising agent. The method comprises the steps of exposing the liquid to a catalyst to remove the oxidising agent from the liquid, and subsequently conveying the liquid to a reverse osmosis or nanofiltration membrane to obtain a retentate rich in the multivalent copper ions and a permeate lean in the multivalent copper ions.

In another embodiment the liquid is a waste stream from a cobalt electroless plating process, with the target species comprising cobalt ions, which may be in the form of free metal ions or complexed metal ions. The present invention therefore further provides a method of treating a liquid waste from a cobalt plating process, the liquid containing multivalent cobalt ions and a reducing agent. The method comprises the steps of exposing the liquid to a catalyst to remove the reducing agent from the liquid, and subsequently conveying the liquid to a reverse osmosis or nanofiltration membrane to obtain a retentate rich in the multivalent cobalt ions and a permeate lean in the multivalent cobalt ions. The target species may further, or alternatively comprise a complexing agent used in the plating process, or other non-metallic species.

In either case, these multivalent ions may be separated from the waste stream using a nanofiltration membrane. In the copper plating example, the copper and sulphate ions are retained in the retentate whilst other species in the liquid, for example water and sulphuric acid, pass through the membrane in the permeate.

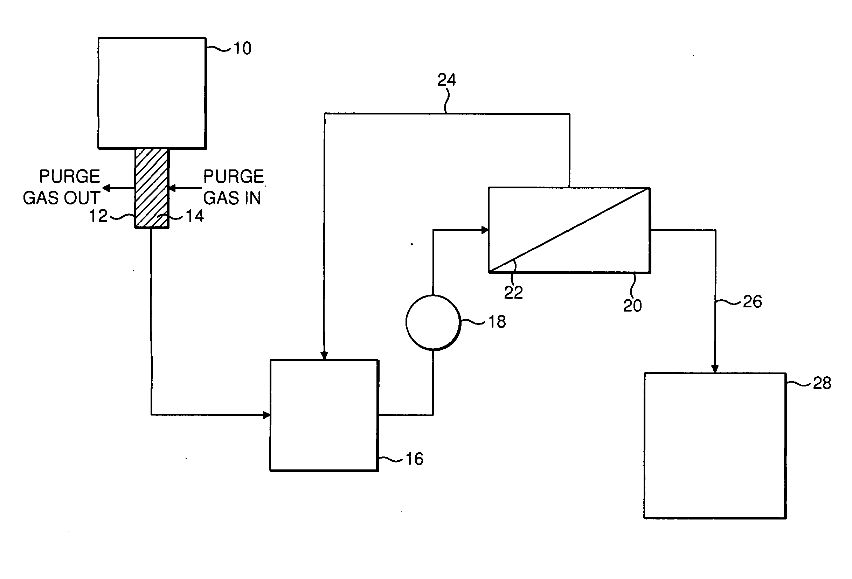

The present invention will now be described, by way of example only, with reference to the accompanying drawing, which illustrates apparatus for treating a liquid waste discharged from a process tool 10. The apparatus comprises a housing 12 containing a catalyst 14 for removing either an oxidising agent or a reducing agent from the liquid waste. In the drawing, the housing 12 is mounted on the tool 10, but the housing 12 may be located adjacent to the tool 10, or further downstream from the tool 10 depending on how rapidly the oxidising agent or reducing agent is to be removed from the liquid waste. A purge gas is conveyed through the housing 12 to remove any gaseous by-products from the removal of the oxidising agent or reducing agent from the liquid waste.

The liquid waste is conveyed from the housing 12 to a storage vessel or tank 16. The liquid waste is pumped from the tank 16 by a liquid pump 18, and subsequently conveyed to a second housing 20 containing a filter membrane 22, which may be either a reverse osmosis (RO) membrane or a nanofiltration (NF) membrane. The liquid pump 18 raises the pressure of the liquid waste above the osmotic pressure so that the liquid waste is divided by the membrane 22 into a retentate and a permeate. The retentate, rich in target species contained in the liquid waste, is returned to the tank 16 by retentate conduit 24. The permeate, lean in these target species, is conveyed by permeate conduit 26 to a permeate storage vessel or tank 28. The tank 28 may be periodically drained or replaced by an empty tank to enable the permeate to be removed for further treatment. The tank 16 may also be periodically drained or replaced by an empty tank to enable the retentate to be removed for further treatment, or to be treated on site using another process, such as electrowinning or precipitation.

Two examples of a method of treating a liquid waste using the illustrated apparatus will now be described. Other membrane configurations may be used as will be known by those skilled in the art of implementing NF and RO technologies.

### Example 1

In this first example, the target species in the liquid waste are copper (II) ions.

An electrolytic copper plating process is performed in the tool 10. An aqueous solution of sulphuric acid and hydrogen peroxide is commonly supplied to such a tool for the selective etching of metal from a substrate in the formation of via holes and register marks, and so the liquid waste discharged from the tool 10 may periodically comprise copper (II) ions, sulphuric acid, and hydrogen peroxide. Before this liquid waste is treated by a waste treatment system, the amount of copper in the liquid waste must be reduced below levels stipulated by environmental regulations (for example, below 2 ppm).

In this example, the filter membrane 22 is provided by a nanofiltration membrane so that the H⁺ and HSO₄⁻ ions in the sulphuric acid can pass through the membrane so that a permeate comprising a copper denuded sulphuric acid solution is conveyed to the permeate tank 28, whilst the copper (II) ions are concentrated in the retentate which is returned to the tank 16. In order to prevent the NF membrane from being damaged by the hydrogen peroxide, the hydrogen peroxide is removed from the liquid waste by the catalyst 14 before it reaches the NF membrane. In this example, the catalyst is provided by platinum loaded alumina, which can convert hydrogen peroxide into oxygen (O₂) and water. As oxygen is generated within the catalyst, air or a nitrogen-containing purge gas is conveyed through the housing 12 to remove the oxygen generated by the catalyst 14 from the liquid waste.

This catalytic removal of hydrogen peroxide from the liquid waste can significantly increase the lifetime of the filter membrane 22 without requiring the addition to the liquid waste of a reducing agent, such as sodium metabisulphite, for reacting with the peroxide. As a result, the increase in the amount of sulphate within the liquid waste which is associated with the reaction between the peroxide and the reducing agent can be avoided, together with the consequential increases in the osmotic pressure and the amount of permeate generated during the liquid treatment.

### Example 2

In this second example, the target species in the liquid waste are multivalent cobalt ions.

An electroless cobalt plating process is performed in the tool 10. Aqueous electroless plating solutions often include a reducing agent, such as dimethylamine borane (DMAB) (or other aminoborane) or sodium hypophosphite (or other alkali metal hypophosphite), which reduces the metal in the plating solution to cause the metal to be deposited over the surface of a substrate. For example cobalt may be present in the plating solution in the form of a cobalt halide, for example cobalt chloride. The plating solution typically also comprises a complexing agent, such as tetramethylammonium citrate, as well as other additives as well known in the art.

Consequently, the liquid waste discharged from the tool 10 comprises multivalent cobalt ions, together with amounts of the reducing agent and other components of the plating solution, and so before this liquid waste is treated by a waste treatment system, the amount of cobalt in the liquid waste must be reduced below levels stipulated by environmental regulations (for example, below 2 ppm).

The reducing agents mentioned above are not themselves harmful to the filtration membrane, but can evolve hydrogen by reaction with water. In view of this, the catalyst 14 is selected to remove the reducing agent from the liquid waste. The catalyst 14 is preferably located as close as possible to the tool 10 so that the liquid waste is rapidly treated to remove the reducing agent therefrom. As illustrated in the drawing, the housing 12 may be mounted directly on the tool 10, or alternatively it may be located immediately adjacent to the tool 10. In this example, the catalyst is provided by palladium loaded alumina, which can convert dimethylamine borane (DMAB) and water into hydrogen (H₂), boric acid and dimethylamine, and which can convert hypophosphite ions and water into hydrogen (H₂), and phosphite ions. As hydrogen is generated within the catalyst, a purge gas such as nitrogen is conveyed through the housing 12 to remove the hydrogen generated by the catalyst 14 from the liquid waste.

In this example, the filter membrane 22 may be provided by either a reverse osmosis (RO) membrane or an NF membrane so that a retentate rich in multivalent cobalt ions is returned to the tank 16, and a permeate lean in multivalent cobalt ions is conveyed to the permeate tank 28.

In this example, the catalytic removal of the reducing agent from the liquid waste enables the reducing agent to be removed without the addition to the liquid waste of a first reactant, such as sodium hypochlorite, for reacting with the reagent, and so without the subsequent addition of a second reactant, such as sodium metabisulphite, for removing excess first reactant from the liquid stream. Consequently, the increase in the salt content of the liquid waste associated with the reactions occurring between these reactants and the components of the liquid stream, and the consequential increase in the osmotic pressure, can be avoided.

## Claims

1. A method of treating a liquid waste containing target species, comprising exposing the liquid to a catalyst in a housing to remove either a reducing agent or an oxidizing agent from-the- liquid, subsequently conveying the liquid to a reverse osmosis or nanofiltration membrane to obtain a retentate rich in the target species and a permeate lean in the target species, returning the retentate to the liquid upstream from the membrane, and purging [a] the housing containing the catalyst with a nitrogen purge gas to remove gaseous by products formed from converting the reducing agent or oxidising agent by the catalyst.

2. A method according to Claim 1, wherein an oxidising agent is removed by the catalyst.

3. A method according to Claim 2, wherein hydrogen, peroxide is removed by the catatyst.

4. A method according to Claim 3, wherin hydrogen peroxide is converted into oxygen (O₂) and water (H₂O) by the catalyst.

5. A method according to any preceding claim, wherein the liquid is a waste stream from a copper plating process, and wherein the target species comprise divalent copper ions.

6. A method according to Claim 1, Wherein a reducing agent is removed from the liquid by the catalyst.

7. A method according to Claim 6, wherein an aminoborane is removed from the liquid by the catalyst.

8. A method according to Claim 7, wherein dimethylamine borane (DMAB) is converted into hydrogen (H₂), boric acid and dimethylamine by the catalyst.

9. A method according to Claim 6, wherein hypophosphite ions are removed from the liquid by the catalyst.

10. A method according to Claim 8, wherein hypophosphite ions are converted into hydrogen (H₂), and phosphite ions by the catalyst.

11. A method according to any of Claims 1 or 6 to 10, wherein the target species comprise at least one metal.

12. A method according to any of Claims 6 to 11, wherein the liquid is a waste stream from a cobalt plating process, and wherein the metallic cations comprise cobalt ions.

13. A method according to any of Claims 1 to 4 or 6 to 12, wherein the catalyst comprises alumina loaded with either platinum or palladium.

## Patentansprüche

1. Verfahren zur Behandlung eines Flüssigabfalls, der Zielspezies aufweist, wobei es das Verfahren umfasst, dass die Flüssigkeit einem Katalysator in einem Gehäuse ausgesetzt wird, um entweder eine Reduktionssubstanz oder eine Oxidationssubstanz aus der Flüssigkeit zu entziehen, wobei die Flüssigkeit danach zu einer Umkehrosmose- oder Nanofiltrations-Membran befördert wird, um ein Retentat zu erhalten, das in den Zielspezies reich ist, sowie ein Permeat, das in den Zielspezies mager ist, wobei das Retentat von der Membran stromaufwärts wieder zu der Flüssigkeit zurückgeführt wird, und das Spülen [a] des Gehäuses, welches den Katalysator aufweist, mit einem Stickstoffspülgas, um gasförmige Nebenprodukte zu entfernen, die durch die Umwandlung der Reduktionssubstanz oder der Oxidationssubstanz durch den Katalysator gebildet werden.

2. Verfahren nach Anspruch 1, wobei ein Oxidationsmittel durch den Katalysator entfernt wird.

3. Verfahren nach Anspruch 2, wobei Wasserstoffperoxid durch den Katalysator entfernt wird.

4. Verfahren nach Anspruch 3, wobei Wasserstoffperoxid durch den Katalysator in Sauerstoff (O₂) und Wasser (H₂O) umgewandelt wird.

5. Verfahren nach einem der vorstehenden Ansprüche, wobei es sich bei der Flüssigkeit um einen Abwasserstrom eines Kupferplattierungsprozesses handelt, und wobei die Zielspezies divalente Kupferionen umfassen.

6. Verfahren nach Anspruch 1, wobei eine Reduktionssubstanz durch den Katalysator aus der Flüssigkeit entfernt wird.

7. Verfahren nach Anspruch 6, wobei ein Aminoboran durch den Katalysator aus der Flüssigkeit entfernt wird.

8. Verfahren nach Anspruch 7, wobei Dimethylaminboran (DMAB) durch den Katalysator in Wasserstoff (H₂), Borsäure und Dimethylamin umgewandelt wird.

9. Verfahren nach Anspruch 6, wobei Hypophosphitionen durch den Katalysator aus der Flüssigkeit entfernt werden.

10. Verfahren nach Anspruch 8, wobei Hypophosphitionen durch den Katalysator in Wasserstoff (H₂) und Phosphitionen umgewandelt werden.

11. Verfahren nach Anspruch 1 oder einem der Ansprüche 6 bis 10, wobei die Zielspezies mindestens ein Metall umfassen.

12. Verfahren nach einem der Ansprüche 6 bis 11, wobei es sich bei der Flüssigkeit um einen Abwasserstrom eines Kobaltplattierungsprozesses handelt, und wobei die Metallkationen Kobaltionen umfassen.

13. Verfahren nach einem der Ansprüche 1 bis 4 oder 6 bis 12, wobei der Katalysator entweder mit Platin oder Palladium beschicktes Aluminiumoxid umfasst.

## Revendications

1. Procédé de traitement de rejets liquides contenant une espèce cible, comprenant les étapes consistant à exposer le liquide à un catalyseur dans un boîtier pour éliminer un agent réducteur ou un agent oxydant du liquide ; transporter subséquemment le liquide à une membrane d'osmose inverse ou de nanofiltration pour obtenir un rétentat riche en l'espèce cible et un perméat pauvre en l'espèce cible, ramener le rétentat dans le liquide en amont de la membrane, et purger : [a] le boîtier contenant le catalyseur avec un gaz de purge à l'azote pour éliminer les sous-produits gazeux formés à partir de la conversion de l'agent réducteur ou de l'agent oxydant par le catalyseur.

2. Procédé selon la revendication 1, dans lequel un agent oxydant est éliminé par le catalyseur.

3. Procédé selon la revendication 2, dans lequel le peroxyde d'hydrogène est éliminé par le catalyseur.

4. Procédé selon la revendication 3, dans lequel le peroxyde d'hydrogène est converti en oxygène (O₂) et en eau (H₂O) par le catalyseur.

5. Procédé selon l'une quelconque des revendications précédentes, dans lequel le liquide est un flux de rejets d'un processus de placage de cuivre, et dans lequel l'espèce cible comprend des ions cuivre divalents.

6. Procédé selon la revendication 1, dans lequel un agent réducteur est éliminé du liquide par le catalyseur.

7. Procédé selon la revendication 6, dans lequel un aminoborane est éliminé du liquide par le catalyseur.

8. Procédé selon la revendication 7, dans lequel le diméthylamine borane (DMAB) est converti en hydrogène (H₂), acide borique et diméthylamine par le catalyseur.

9. Procédé selon la revendication 6, dans lequel les ions hypophosphite sont éliminés du liquide par le catalyseur.

10. Procédé selon la revendication 8, dans lequel les ions hypophosphite sont convertis en hydrogène (H₂), et en ions phosphite par le catalyseur.

11. Procédé selon l'une quelconque des revendications 1 ou 6 à 10, dans lequel l'espèce cible comprend au moins un métal.

12. Procédé selon l'une quelconque des revendications 6 à 11, dans lequel le liquide est un flux de rejets à partir d'un procédé de placage de cobalt, et dans lequel les cations métalliques comprennent des ions cobalt.

13. Procédé selon l'une quelconque des revendications 1 à 4 ou 6 à 12, dans lequel le catalyseur comprend de l'alumine chargée de platine ou de palladium.
